Europäisches Patentamt

European Patent Office

Office européen des brevets

(19)

(11) Publication number: **0 203 752 B1**

(12) **EUROPEAN PATENT SPECIFICATION**

(45) Date of publication of patent specification: **05.08.92**   (51) Int. Cl.⁵: **G02B 5/128**

(21) Application number: **86303604.2**

(22) Date of filing: **12.05.86**

(54) **Transparent sheet containing directional image information and method for its production.**

(30) Priority: **13.05.85 US 733066**
     **13.05.85 US 733067**

(43) Date of publication of application:
     **03.12.86 Bulletin  86/49**

(45) Publication of the grant of the patent:
     **05.08.92 Bulletin  92/32**

(84) Designated Contracting States:
     **AT BE DE FR GB IT NL**

(56) References cited:
     **EP-A- 0 170 518      EP-A- 0 171 252**
     **US-A- 3 530 779      US-A- 3 573 954**
     **US-A- 4 099 838      US-A- 4 200 875**

(73) Proprietor: **MINNESOTA MINING AND MANU-**
     **FACTURING COMPANY**
     **3M Center, P.O. Box 33427**
     **St. Paul, Minnesota 55133-3427(US)**

(72) Inventor: **Porter, Gerald R. c/o Minnesota Min-**
     **ing and**
     **Manufacturing Company 2501 Hudson Road**
     **P.O. Box 33427 St. Paul Minnesota 55133(US)**
     Inventor: **Bradshaw, Thomas I. c/o Minnesota**
     **Mining and**
     **Manufacturing Company 2501 Hudson Road**
     **P.O. Box 33427 St. Paul Minnesota 55133(US)**
     Inventor: **Hockert, Eric N. c/o Minnesota Min-**
     **ing and**
     **Manufacturing Company 2501 Hudson Road**
     **P.O. Box 33427 St. Paul Minnesota 55133(US)**

(74) Representative: **Baillie, Iain Cameron et al**
     **c/o Ladas & Parry, Altheimer Eck 2**
     **W-8000 München 2(DE)**

Rank Xerox (UK) Business Services

## Description

### Technical Field

This invention concerns a substantially transparent sheet which contains a directional image, i.e., an image that is viewable only within a restricted conical field of view of predetermined angular width and central axis. This invention also concerns methods for forming such sheets.

### Background

Sheeting in which an image of a pattern or legend is built has found a number of important uses, particularly as distinctive labels useful to authenticate an article or document. Such sheeting has found use as validation stickers for vehicle license plates and as security films for driver's licenses, government documents, phonograph records, tape cassettes, and the like, as taught in U.S. Pat. Nos. 3,154,872; 3,801,183; 4,082,426; and 4,099,838. In each of the patents, the built-in images must be incorporated into the sheeting while the sheeting is being constructed.

Sevelin et al., U.S. Pat. No. 3,801,183, discloses a substantially transparent sheeting to be used as an overlay on a document such as a credit card, a pass, a license or phonograph label to serve as an identifying or authenticating means. The sheet is retroreflective over its entire surface area and contains a retroreflecting pattern or legend which is obscure in that it is invisible or only faintly visible to the naked eye under diffuse light and does not obstruct any underlying visual information.

Nordgren, U.S. Pat. No. 3,154,872, and Brown, U.S. Pat. No. 4,082,426, teach other retroreflective sheets containing images that may be obscure, which sheets can be adhesively bonded to documents to make counterfeiting more difficult. The imaged sheets disclosed in those patents are not transparent, however, and so would obstruct information over which they were applied.

Other methods have been developed which use laser irradiation of a sheet material to form directional images therein. These methods rely on opaque masking layers to focus the laser light to a damage locus within a monolayer of microlenses, or to themselves absorb ratiation and develop deformations which are viewable as a directional image. If a transparent sheet containing a directional image is desired, after formation of the visible deformations, the opaque masking must be removed.

Galanos, U.S. Pat. No. 4,200,875, discloses a method of forming directional images in opaque retroreflective sheeting which comprises a specular reflecting layer disposed behind a monolayer of glass microspheres. In the method, laser irradiation of the retroreflective sheeting in an imagewise fashion causes structural alterations or modifications in the sheet which are viewable as directional images. Because the Galanos sheeting is opaque, it would obstruct underlying information if adhered to a document as an overlay.

Orensteen et al.,. EPA No. 85 305 413.8, discloses a related method wherein the microspheres are partially embedded in a light-colored rather than dark-colored binder layer.

Orensteen et al., EPA No. 85 305 412.0 discloses a sheet containing a directional image composed of axial markings in a mask layer spaced apart from the rear surfaces of microlenses by a transparent spacing layer.

Hockert et al., Jap. Appln. No. 19824/84, filed February 6, 1984, Kokai No. 148004/84, laid open August 24, 1984, forms a directional image in sheeting which comprises a monolayer of microlenses, a masking layer disposed behind the monolayer of microlenses, and a transparent spacing layer located between those two layers. Laser irradiation of the sheeting forms openings in the masking layer which are visible as a directional image. By coloring the transparent spacer layer through the openings and then removing the masking layer, such as with a chemical etch, one can obtain a transparent sheet containing a directional image. The sheet may then be adhered to a document as an overlay which provides a secure means of authenticating the document without interfering with the normal use of the information contained thereon.

### Disclosure of Invention

This invention provides novel sheets which are substantially transparent and bear directional images. The invention also provides, for the first time insofar as known, a novel method whereby directional images may be formed directly in substantially transparent sheets. By the present invention, directional images may even be formed in a transparent sheet that has already been applied as an overlay on a document such as a driver's license or passport. Because the images are directional, they may be formed so as to not interfere with reading the underlying information through the overlying sheet. The directional images formed according to this invention are viewable both under diffuse light and under retroreflective conditions.

Briefly summarizing, the novel transparent sheet comprises a monolayer of microlenses which partially protrude from the front of the sheeting. At least some of the microlenses have a discrete, localized deformation or marking at the rear thereof. In most embodiments of the invention, the sheet further comprises a partially light transmissive mirror disposed at the rear of at least some of the microlenses. The localized deformations or markings may take the form of a cavity within an individual microlens, a cavity opening through the back of a microlens, an opening, charring, or other modification within the partially light transmissive mirror, or some combination among these various modifications. These markings may be termed "axial markings", in that the marking associated with each microlens is centered on an axis that extends through the optical center of the microlens and is parallel to, or intersects at a common viewing point or line, the similar axes for the other deformed microlenses in the image area. The resulting set of markings is visible as an image within a predetermined conical field of view in ordinary diffuse light conditions.

A sheet of the invention, particularly one having a combination of directional images and partially light transmissive mirror, offers unique benefits as a security film. Although the sheet is transparent, the partially light transmissive mirror makes the sheet retroreflective when viewed under retroreflective viewing conditions. As taught in Sevelin et al., U.S. Pat. No. 3,801,183, the mirror may be patterned, with some areas of the mirror having greater reflective efficiency than other areas, so that under retroreflective viewing conditions, a viewer discovers retroreflective images which are hidden or obscure when the sheet is viewed in ordinary diffuse light conditions. Insofar as known, the combination in a transparent film of hidden retroreflective images and images that are visible under ordinary diffuse lighting conditions only within a limited conical field of view, has never before been provided. This combination of features offers a unique set of criteria by which the authenticity of a document overlaid with the film can be judged.

In brief summary, the preferred method for forming the novel sheets of the invention comprises directing a laser beam with a short pulse duration (less than 50 nanoseconds) in an imagewise fashion at a selected angle of incidence to the face of the sheeting. The wavelength of the laser beam is selected such that it is focused by microlenses to form a deformation at the rear of each microlens which the beam strikes. Typically in the case of glass microlenses, a laser with a pulse duration of about 10 nanoseconds adjusted so as to provide a power density of approximately one megawatt per square centimeter at the sheet's surface is useful. The resulting set of deformations is visible as an image at the angle of incidence of the imaging laser beam.

Brief Description of the Drawing

FIGURES 1-3 are schematic cross-sections through fragments of sheets with different embodiments which are examples of some of the sheets which may be imaged according to this invention.

FIGURES 4-6 are photomicrographs showing the deformations formed according to the preferred method of this invention in sheets comprising spherical glass microlenses.

Detailed Description of Invention

A sheet to be imaged according to the novel method comprises a monolayer of microlenses embedded in a layer of binder material and preferably distributed in substantially uniform fashion. The binder material is typically a substantially transparent polymeric material, such as an alkyd resin, polyurethane, or ethylene vinyl acetate. The microlenses are preferably spherical because they may be imaged from virtually any angle of incidence, and if the sheet is retroreflective, it will be retroreflective over a wide range of angles, whereas microlenses with different geometries may be restricted to narrower angles of effectiveness. An example of a sheet comprising nonspherical microlenses is disclosed in de Montebello, U.S. Pat. 3,503,315. Glass microlenses are preferred because they tend to be more durable than microlenses formed from other materials.

Microspheres with a refractive index within a range of 1.5 to 2.7 are useful. However, microspheres with refractive indices above 2.4 may introduce coloring, whereas colorless clarity is usually preferred so that the sheet may be as unobtrusive as possible when applied to a document as an authenticating means. Microspheres with a refractive index of approximately 1.8 to 1.9 are preferred, because when such microspheres are partially embedded in the support film and partially protrude from the front of said sheet, they will focus white light at approximately the back surface of the microsphere. Light in the infrared region will be focused to an area slightly behind where white light is focused.

The glass microspheres preferably have an average diameter of about 10 to 100 micrometers, and are ideally of a substantially uniform average diameter between about 50 to 60 micrometers. If the microspheres are much larger, the sheet tends to become thicker and more expensive to make, and images formed thereon will have less resolution. If the microspheres are much smaller, images formed on the sheet will have greater resolution, but it is more difficult to uniformly distribute the microlenses when constructing the sheet, and the images formed thereon are less bright because of diffraction losses.

The preferred method of the present invention employs a laser which has a short pulse duration (less than 50 nanoseconds), and sufficient power to cause deformation of each of the microlenses which the laser beam strikes. Typically in the case of a sheet comprising glass microlenses, a laser with a pulse duration of about 10 nanoseconds adjusted so as to provide a power density of approximately one megawatt per square centimeter at the sheet's surface is useful. Suitable lasers include pulsed, electro-optically Q-switched Nd:YAG (Neodymium:Yttrium Aluminum Garnet) lasers, such as the "Quanta-Ray DCR-2 Nd:YAG Laboratory Laser System" available from Spectra-Physics, Inc. of San Jose, California, which emits a beam with a wavelength of about 1064 nanometers with a pulse duration of about 10 nanoseconds. Each microlens focuses the laser light incident upon it to a small spot to create a deformation or axial marking. Microscopic studies of novel sheetings made with such lasers reveal that each axial marking is typically a cavity within a microlens which may open through the rear wall of the microlens.

The set of axial markings is visible within a conical field of view whose central axis is determined by the angle of incidence at which the imaging beam is directed to the sheet. The angular width of the conical field of view is related to the size of the markings. Larger markings are visible as an image across a wider field of view than are smaller markings. The size of a marking is determined by the energy density of the irradiation applied to the sheet which creates the marking. If a higher-energy-density beam is used to form the axial markings, the image will have a wider conical field of view. Similarly, if a beam with a lower energy density is used, the image will have a narrower conical field of view.

When forming images on sheeting which comprises a monolayer of the preferred glass microspheres having diameters of approximately 50 to 60 micrometers, the laser beam is preferably adjusted to form axial markings having diameters within a range from 1 to 20 micrometers. When the microlenses are substantially all about 50 to 60 micrometers in diameter and the average diameter of the markings is from 3 to 10 micrometers, each authenticating image is viewable under ordinary diffuse lighting conditions only across a field of view of about 10 to 20 degrees. Images composed of larger markings are viewable within larger conical fields of view; however, there would seldom be any reason for a directional image to be visible across a field of view exceeding 30 degrees. On the other hand, a directional image which was viewable only across a field of view of less than six to eight degrees might be difficult to locate.

As previously indicated, most embodiments of the sheet of the invention include, in addition to a monolayer of microlenses, a semi-transparent, or partially light transmissive, dielectric mirror which reflects a portion of, and transmits another portion of, the light incident upon the microlenses. Such dielectric mirrors are taught in Sevelin, U.S. Pat. No. 3,801,183, wherein it is also taught to form such mirrors with at least two regions of different retroreflective efficiency, one a legend-defining area and the other a background-defining area, so as to form a transparent sheet containing legends which are obscure, i.e., invisible or only faintly visible to the naked eye, under diffuse light but are readily visible under retroreflective lighting conditions. The partially light-transmissive mirror is typically coated directly on the rear surface of the microlenses. In a sheet made with glass microspheres of 1.9 index of refraction partially embedded in, and partially exposed out of, the sheet so as to have an air interface, white light is focused approximately at the rear of the microspheres. The novel method may be performed on such sheets to provide a sheet which contains both the obscure or latent retroreflective legend disclosed by U.S. Pat. No. 3,801,183 and the directional images of this invention.

The laser radiation may be directed to the sheet in a pattern, such as through a mask, to form markings at the rear of only a selected portion of the microlenses, or it may be applied uniformly over the whole surface of the sheeting. A sheet is regarded as "imaged" according to this invention whether it is prepared with selectively patterned or with whole-surface radiation, since in either case the sheet has a visibly distinctive appearance at certain angles of viewing and under certain lighting conditions.

A sheet bearing two directional images may be formed, if after directing a suitable laser beam in an imagewise fashion at a sheet at a first selected angle of incidence, a laser beam is directed in imagewise fashion at the sheet at a different selected angle of incidence thereby forming two sets of markings. Further repetitions of the step may be performed to provide a sheet of the invention with more than two directional images. The angles of incidence selected may be spaced sufficiently far apart that the respective conical fields of view of the different images will not overlap or interfere with each other.

The novel method may also lead to other unique and unexpected visual effects. The set of deformations formed in the microlenses by the laser beam are generally visible under ordinary diffuse lighting conditions within a conical field of view as a dark image or pattern. When viewed retroreflectively within that conical field of view, the set of deformations is visible as an image which is darker than the surrounding retroreflective background. However, when viewed retroreflectively at an angle somewhat outside that conical field of view, the set of deformations is visible as an image which is brighter than the surrounding retroreflecting background.

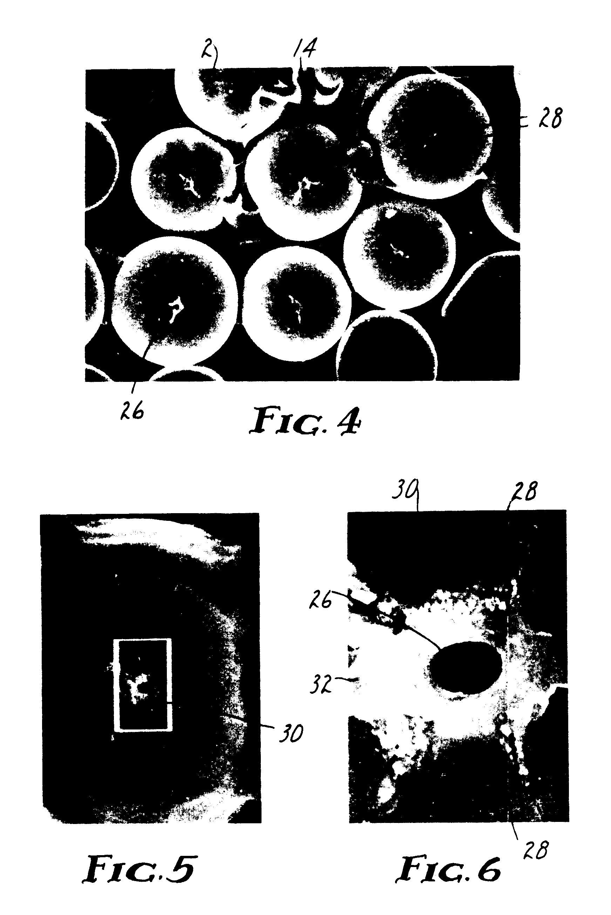

The precise cause of the bright retroreflectivity of the set of deformations is not fully understood, but may be due in part to the cracks which some deformations formed by the preferred laser were observed to comprise. Microscopic studies reveal that the cracks, typically from three to five in number, extend radially from a central locus. The locus appears to be a cavity formed within the microlens that in some instances opens through the back of the microlens. FIGURES 4-6 and the associated description thereof contain a description of the radial cracks.

The mechanism by which these radial cracks are formed is not fully understood, but one possible explanation is that because the imaging laser beam has a short pulse width, the microlenses are heated so rapidly that they crack as well as form cavities when irradiated. Another possible explanation for the formation of the cracks is that the electromagnetic field associated with the imaging laser beam has a high peak flux density that exceeds the dielectric breakdown value of the microlenses.

In addition to the preferred short pulse laser described above, lasers such as the Model 512Q laser available from Control Laser Corporation of Orlando, Florida, a pulsed, electro-optically Q-switched Nd:YAG laser, which equiped with a frequency doubler emits a beam with a wavelength of 532 nanometers in pulses of approximately 200 to 400 nanoseconds in duration to provide a power density of approximately one megawatt per square centimeter at the sheeting's surface may be employed according to the present invention to form a directional image in a sheet comprising a partially light transmissive mirror. With such a laser, a set of axial markings may be formed in the sheet which are generally visible under ordinary diffuse lighting or retroreflective conditions within a conical field of view as a dark image. However, when viewed retroreflectively at an adjacent angle somewhat outside that conical field of view, the set of markings is visible as an image which is brighter than the surrounding retroreflecting background. This effect is seen within a region annular to the conical field of view, with the annular band typically being from 10° to 40° wide. When viewed at an angle outside this annular region of brighter retroreflectivity, the set of axial markings is indistinguishable from the surrounding background and no image is visible.

The precise cause of the annular region of bright retroreflectivity of the set of markings is not fully understood. One explanation is that the laser irradiation may cause separations between the microlenses and the underlying dielectric layer surrounding the primary axial markings from which the dark image results. This separation, if it exists, may provide another surface or optical spacing distance which increases the retroreflectivity of the markings when viewed within the region annular to the conical field of view of the dark image.

Another unexpected visual effect may be achieved employing such a laser as the Control Laser Corporation Model 512Q laser to image a sheet that comprises a monolayer of microlenses but is free of a dielectric mirror. When irradiated with a laser beam according to the method of this invention, a dark image is formed which is essentially nondirectional under diffuse light, i.e., the image is viewable across a wide angle, generally from any angle at which the surface of the sheet is visible. Under retroreflective conditions, however, the image exhibits directionality characteristics similar to those of images formed by similar lasers in sheets which comprise a dielectric mirror disposed behind the monolayer of microlenses. The image is visible within a conical field of view as a dark image, when viewed at an adjacent angle within a region annular to the conical field of view it is visible as a bright image, and when viewed at an angle beyond the annular region the image is essentially obscure.

Because the sheets formed according to the present invention are transparent, they can easily be adapted to be adhesively bonded over the information areas of a document. Strong transparent adhesives are available which will bond so firmly to a document that the overlying sheet cannot be removed without visibly damaging the document and/or sheet, thereby making the overlays a secure means for authenticating a document to which they might be attached. The sheets can be very thin and flimsy, essentially comprising only a layer of microlenses, a layer of binder material in which the microlenses are embedded, a partially light transmissive mirror, and optimally an additional adhesive layer. In one embodiment, as an authenticating device for instance, the image may be made so as to be visible at an angle at which a document is not normally viewed so as not to interfere appreciably with the legibility of the underlying information such as written or printed matter or a photograph. When placed as an overlay directly on the information bearing portion of a document, a driver's license for instance, the sheet prevents tampering with the information and provides a secure form of authentication that does not interfere with the normal use of the document. In another embodiment, the image may be made so as to be visible at an angle at which a document is normally viewed to ensure that the image is brought to a reader's attention.

An advantage of this invention is that a transparent sheet which has already been adhered as an overlay may have a directional image formed therein. This capability allows the information borne by an overlay to be updated and makes more convenient the formation of a limited number of sheets with a particular image contained therein. For instance, a driver's license which had been originally issued with a sheet of the invention applied as an overlay as a means of authentication might have a special message, such as a restriction to corrective lenses, incorporated therein at a later date. The restriction can be incorporated in the existing license, thereby avoiding the expense and delay of issuing a replacement. The newly added information will achieve the same degree of security as the images originally contained therein.

Transparent sheets bearing directional images have many uses, most notably as authenticating images or overlays used to ensure that documents, products, or any articles to which they might be attached are genuine. Such sheets can be used by manufacturers or sellers of name brand products to prevent passing off of counterfeit products. The ability to make sheets bearing multiple images further increases this utility. An advantage of the sheets of this invention is the difficulty of removing or tampering with the image without destroying the structural integrity of the sheet. Further, duplicating or reproducing the images would be difficult without expensive and sophisticated equipment and know-how.

Possible uses for sheets imaged according to this invention include driver's licenses, passports, bank cards, credit cards, and identification cards. Other applications wherein the novel sheet or method of this invention may be useful will be ovious to those skilled in the art.

Detailed Description Of Drawings

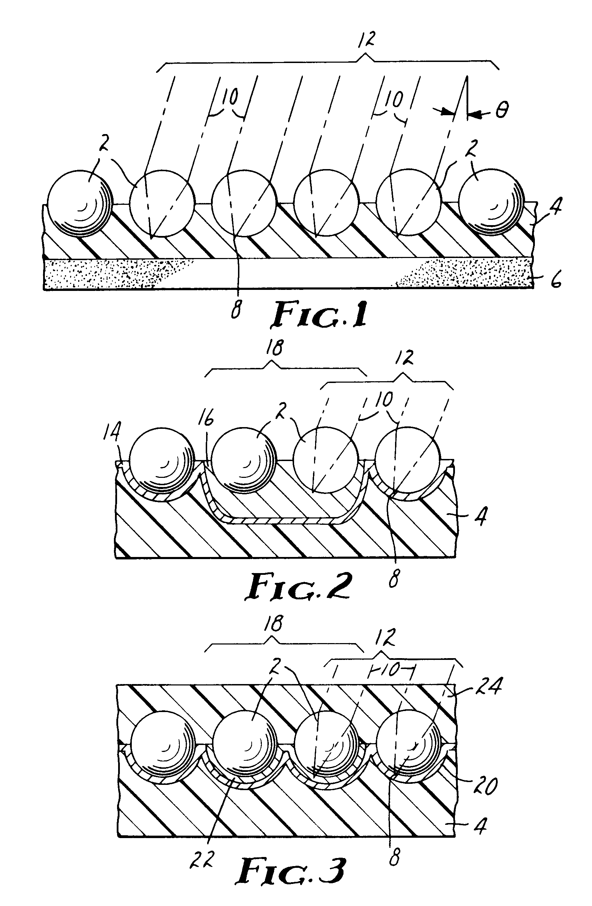

FIGURE 1 shows a substantially transparent sheet comprising a monolayer of microlenses 2 which are partially embedded in a transparent polymeric binder 4. The embodiment shown is adapted to be bonded to a document or article with a transparent adhesive 6. According to the method, a suitable laser beam 10 is directed to the sheet in an imagewise fashion at an incident angle $\theta$. The laser beam incident upon a microlens is focused at location 8 thereby forming an axial marking at the rear of each microlens which the beam strikes. The set of axial markings thus formed is disposed such that it is visible as a directional image 12.

FIGURE 2 shows a substantially transparent retroreflective sheet comprising a monolayer of microlenses 2 and semi-transparent dielectric mirror 14 which reflects a portion of, and transmits another portion of, the light passing through the outer surface of the microlenses. A discontinuous spacing layer 16, such as a varnish layer, changes the retroreflective efficiency of the dielectric mirror 14 to form an obscure retroreflectively viewable image 18 as taught in U.S. Pat. No. 3,801,183. A directional image 12 may be formed in such a sheeting according to this invention by the irradiation at an incident angle $\theta$ with a suitable laser beam 10.

FIGURE 3 shows another embodiment of a substantially transparent retroreflective sheet imaged according to this invention in which the monolayer of microlenses 2 is embedded in a permanent transparent covering 24. The obscure retroreflectively viewable image 18 is provided by the different retroreflective efficiency of the continuous semi-transparent dielectric mirror 20 and discontinuous semi-transparent dielectric mirror 22. Such sheetings are also taught in Sevelin. A directional image 12 may be formed in such a sheeting according to this invention by the laser irradiation at an incident angle $\theta$ with a suitable laser beam 10.

The schematic drawings are illustrative only and are not highly precise section views, e.g., since each circle represents a full circumference as though the microspheres were of uniform diameter and arranged in uniform rows, and are intended to be nonlimiting.

FIGURE 4 is a photomicrograph of the back sides of some microlenses in a retroreflective sheeting as shown in FIGURE 2 which was directionally imaged at an incident angle $\theta$ of approximately 0°, i.e., normal to the surface of the sheeting with a laser having a short pulse width. The photomicrograph is at a magnification of approximately 620X. After the image was formed, an epoxy resin was cured in contact with the exposed microlenses and then the polymeric binder and dielectric layer were removed to expose the back sides of the microlenses. Some remaining portions of the dielectric layer 14 can be seen around the central microlens. The axial markings formed in the microlenses by the laser beam are clearly visible. Each axial marking can be seen to be an opening 26 in the back of a microlens and a set of cracks 28 extending radially therefrom.

FIGURE 5 is a photomicrograph of a single microlens similarly prepared as in FIGURE 4 shown at a magnification of approximately 1290X.

FIGURE 6 is a photomicrograph of the area 30 shown in FIGURE 5 at a magnification of approximately 6450X. The axial marking can be clearly seen to comprise a cavity 26 opening through the back of the microlens from within, a set of cracks 28 extending radially from the cavity, and an area that has the appearance of molten glass flow 32.

This invention will now be more specifically described by the following examples which are illustrative only and intended to be nonlimiting.

Example 1

In this example a mask was laid atop the surface of a sheet which was to be imaged, and a laser beam was directed through the mask to the sheeting. The mask was used to block portions of the beam thereby causing the underlying sheet to be irradiated in an imagewise fashion.

The sheet which was imaged was a piece of "CONFIRM" Brand Security Film manufactured by the Minnesota Mining and Manufacturing Company of St. Paul, Minnesota. The sheet comprised a monolayer of protruding glass microspheres with a partially light transmissive dielectric mirror disposed on the underside of the microspheres. Such sheeting is disclosed in Sevelin et al., U.S. Pat. No. 3,801,183.

The mask comprised a transparent sheet of polyester, approximately 0.175 millimeters thick, and an opaque aluminum vapor coat thereon. The vapor coat covered only a portion of the polyester sheet, defining a bare, hence transparent, region in the shape of a "3M" logo.

The laser used was a Quanta Ray Model DCR-2A (30) Neodymium:Yttrium Aluminum Garnet (Nd:YAG) pulsed, Q-switched laser. The laser emitted a beam with a wavelength of 1064 nanometers in pulses of 0.7 joules with a pulse duration of approximately 10 nanoseconds. The output beam had a diameter of approximately 0.64 centimeters which was expanded to approximately 4.7 centimeters in diameter with a telescope-like lens assembly, thereby providing an average energy density of approximately 0.040 joules per square centimeter.

The mask was laid atop the sheet. The mask and sheet were then irradiated with one pulse of the laser at an incidence angle of approximately 30°.

The mask was then removed and the imaged sheet examined. In ordinary diffuse lighting, a dark image in the shape of "3M" was visible in a conical field of view centered at the incidence angle of the laser irradiation. Outside this conical field, which was approximately 10° wide, no image was visible. When viewed retroreflectively within the conical field of view, the "3M" was visible as an area darker than the surrounding background. When viewed retroreflectively at an angle somewhat outside the conical field of view, the image was visible as an area brighter than the surrounding background.

Example 2

A piece of exposed-lens sheeting comprising a monolayer of protruding glass microspheres with a partially light transmissive dielectric mirror disposed on the underside of the microspheres was irradiated from the exposed-lens side with the laser beam emitted by a Control Laser Corporation Model 512Q Nd:YAG Laser equiped with a Model 5-8 Frequency Doubler (Second Harmonic Generator) available from the Inrad Company of Northvale, New Jersey. The microspheres had a refractive index of approximately 1.9 and the dielectric mirror comprised vapor-deposited zinc sulfide. Such sheeting is disclosed in Sevelin, U.S. Pat. No. 3,801,183. The laser, equipped with the frequency doubler, was adjusted to direct a beam approximately 1.0 millimeter in diameter with an average power of approximately 400 milliwatts at an incident angle of 0°, i.e., normal, to the surface of the sheeting. The pulse rate of the beam was approximately 2.6 kilohertz. The sheeting was scanned with the laser by manually drawing the sheeting across the path of the beam at approximately 1 centimeter per second.

After laser irradiation, an image in the irradiated areas of the sheet was visible under diffuse light as a dark image in a conical field of view. The conical field had as its central axis the incident angle of the laser irradiation and was approximately 10° to 20° wide. The image was visible within approximately the same conical field of view under retroreflective conditions as a dark image. When viewed under retroreflective conditions in an annular region or band approximately 40° wide outside the conical field the image was brighter than the surrounding background.

After the image was examined, an epoxy resin was cured in contact with the exposed microspheres and the polymeric binder material and dielectric mirror were removed to expose the back surfaces of the microlenses. When viewed with a scanning electron microscope, the microspheres in the image areas were seen to have what appeared to be a small cavity opening through their rear surface on an axis normal to the face of the sheet.

Example 3

A piece of sheeting similar to that in Example 2 was first laminated as a substantially transparent overlay to a sample driver's license which contained printed information. It was then irradiated according to the procedure and conditions outlined in Example 2.

The resultant image had characteristics similar to that formed in Example 2. The underlying printed information remained viewable under ordinary diffuse lighting conditions.

Example 4

A piece of sheeting similar to that in Example 2 was irradiated using the same procedure and conditions as in Example 2 except the laser was adjusted to an average power of approximately 300 milliwatts and a motorized translation stage was used to provide a scanning speed of approximately 0.65 inch per second.

The resultant image had characteristics substantially similar to that formed in Example 2.

Example 5

A piece of sheeting similar to that in Example 2 was irradiated using the same procedure and conditions as in Example 4 except the laser was adjusted to an average power of approximately 250 milliwatts.

The resultant image had characteristics similar to that formed in Example 2 except that both the conical field of view and the annular region of brighter retroreflectivity were a few degrees (approximately 5°) narrower than in Example 2.

Example 6

A piece of sheeting similar to that in Example 2 was irradiated using the same procedure and conditions as in Example 5 except the laser was adjusted to an average power of approximately 230 milliwatts.

The resultant image had characteristics similar to that formed in Example 5.

Example 7

A piece of sheeting similar to that in Example 2 except it comprised no partially light transmissive, dielectric mirror was irradiated from the exposed bead side using the same procedure and conditions as in Example 5 except the laser was adjusted to a beam diameter of approximately 0.3 millimeter.

The resultant image was visible under ordinary diffuse light conditions as a dark image over a wide angle, essentially any angle from which the front of the sheeting was visible. Under retroreflective viewing conditions the image had similar characteristics as in Example 2, i.e., visible as a dark image within a conical field of view approximately 10° to 20° wide and visible as a bright image in a region annular to the conical field.

**Claims**

1. A substantially transparent sheet comprising a monolayer of microlenses (2) arranged on a further layer of the sheet, said sheet, when in use, being viewed from a first or front side, **characterized in that** there is a marking (8) in the rear portion or on the rear surface of at least some of the microlenses or within said further layer and wherein each of said markings consists of a structural modification of said microlenses and/or said further layer, said modification comprising:

   (a) a cavity opening through the rear of a microlens; or
   (b) an opening or charring within said further layer adjacent the rear of the microlens; or
   (c) a combination of (a) and (b);

   and wherein said markings are centered on axes that extend through the optical centers of the respective microlenses and are viewable as an image (12) across a predetermined conical field under ordinary diffuse light conditions.

2. A sheet as defined in Claim 1 further characterized in that
   said sheet further comprises a partially light transmissive mirror (14) disposed behind the rear surfaces of at least some of said microlenses (2) such that under retroreflective viewing conditions the sheet is brightly retroreflective in the areas occupied by the mirror.

3. A sheet as defined in Claim 2 further characterized in that
   the microlenses and associated partially light transmissive mirror in a first, legend defining area have a different retroreflective efficiency than the microlenses and associated partially light transmissive mirror in a second, background defining area such that said sheet has retroreflective legend areas and retroreflective background areas, which areas are substantially indistinguishable under ordinary diffuse light viewing conditions, but which are readily visually discernible from one another under retroreflective conditions.

4. A sheet as defined in any one of Claims 1-3 further characterized in that
   said markings (8) are radial cracks in the rear portion of said microlenses (2), the locus of said radial cracks being a cavity within the microlens.

5. A sheet as defined in Claim 4 further characterized in that
   when said sheet is viewed under retroreflective viewing conditions within a predetermined conical field of view said markings (8) appear darker than surrounding background areas, and when viewed under retroreflective conditions other than within said predetermined conical field of view said markings appear brighter than said surrounding background areas.

6. A sheet as defined in Claim 1, further characterized in that

said markings (8) are viewable as an image from the front of the sheeting in ordinary diffuse light conditions, and under retroreflective conditions are viewable as a dark image across a predetermined conical field of view and are viewable as a bright image within a region annular to said conical field of view.

7. A sheet as defined in any one of Claims 1-6 further characterized in that

said microlenses partially protrude from the front of said sheet.

8. A sheet as defined in any one of Claims 1-7 further characterized in that

said microlenses are glass microspheres having an index of refraction between about 1.5 and about 2.7.

9. A method of forming directional images in substantially transparent sheet (4) comprising a monolayer of closely spaced microlenses (2) arranged on a further layer of the sheet, said sheet, when in use, being viewed from a first or front side

**characterized in that**

said method comprises directing a laser beam (10) at a selected angle of incidence ($\theta$) to the face of said sheet (4), the wavelength of the laser being selected such that the beam is focused by the microlenses to form markings (8) in the rear portion or on the rear surface of each microlens (2) which said beam strikes or within said further layer,

and wherein each of said markings is formed as a structural modification of said microlenses and/or said further layer, said modification comprising, eg.:

(a) a cavity opening through the rear of the microlens; or

(b) an opening or charring within said further layer adjacent the rear of the microlens; or

(c) a combination of (a) and (b);

and such that said markings are centered on axes that extend through the optical centers of the respective microlenses and are viewable as an image (12) across a predetermined conical field under ordinary diffuse light conditions.

10. A method as defined in Claim 9 further characterized in that

said laser beam has a pulse duration of less than 50 nanoseconds.

11. A method as defined in Claim 9 further characterized in that

said sheet is retroreflective and comprises a partially light transmissive mirror (14) disposed at the rear surfaces of at least some of said microlenses.

12. A method as defined in claim 11 further characterized in that

said laser beam has a wavelength of approximately 532 nanometers, a pulse duration of between about 200 and about 400 nanoseconds, a pulse frequency of between about 2 and about 10 kilohertz, and a power intensity at the surface of said sheet of between about 0.01 and about 10.0 megawatts per square centimeter.

13. A method as defined in any one of Claims 9-12 further characterized in that

said method further comprises adapting said sheet to be adhesively bonded over the information area of a document without interfering with the legibility of that information.

14. A method as defined in any one of Claims 9 - 12 further characterized in that

said method comprises adhesively bonding said sheet over the information area of a document without interfering with the legibility of that information before said laser beam is directed to the face of said sheet to form said markings.

15. A method as defined in any one of Claims 9 - 14 further characterized in that

said microlenses partially protrude from the front of said sheet.

16. A method as defined in any one of Claims 9 - 15 further characterized in that said

microlenses are glass microspheres having an index of refraction between about 1.5 and 2.7.

17. A method as defined in any one of Claims 9 - 16 further characterized in that

said laser beam is selected to form markings which can be viewed as an image under diffuse light conditions only across a cone which has a full width of about 6 to about 20 degrees, and wherein said angle of incidence is different from angles at which documents are normally viewed.

18. A method as defined in any one of Claims 9 - 17 further characterized in that

said laser beam is directed at a second different selected angle of incidence to the face of said sheet to form a second set of markings, which set of markings appears as an image when viewed at said second selected angle.

**Revendications**

1. Feuille sensiblement transparente, comportant une couche unique de microlentilles (2), agencée sur une couche supplémentaire de la feuille, celle-ci, lorsqu'elle est utilisée, étant regardée depuis un premier côté ou côté avant, caractérisée en ce qu'il y a une marque (8) dans la partie arrière ou sur la surface arrière d'au moins certaines des microlentilles ou dans ladite couche supplémentaire, chacune de ces marques consistant en une modification structurale des microlentilles susdites et/ou de ladite couche supplémentaire, cette modification comprenant :

(a) une cavité s'ouvrant à travers l'arrière d'une microlentille; ou

(b) une ouverture ou carbonisation dans ladite couche supplémentaire, adjacente à l'arrière de la microlentille; ou

(c) une combinaison de (a) et de (b),

les marques susdites étant centrées sur des axes qui s'étendent en passant par les centres optiques des microlentilles respectives et étant visibles sous forme d'une image (12) en travers d'un champ conique prédéterminé sous des conditions ordinaires de lumière diffuse.

2. Feuille suivant la revendication 1, caractérisée en outre en ce que cette feuille comprend en plus un miroir (14) transmettant partiellement la lumière et disposé à l'arrière des surfaces arrière d'au moins certaines des microlentilles (2) susdites, de telle sorte que, sous des conditions de vision rétroréfléchissante, cette feuille est rétroréfléchissante de façon brillante dans les zones occupées par le miroir.

3. Feuille suivant la revendication 2, caractérisée en outre en ce que les microlentilles et le miroir associé, transmettant partiellement la lumière, se trouvant dans une première zone formant des représentations, ont une efficacité différente de rétroréflexion que les microlentilles et le miroir associé, transmettant partiellement la lumière, se trouvant dans une seconde zone formant fond, de sorte que cette feuille comporte des zones rétroréfléchissantes à représentations et des zones rétroréfléchissantes de fond, ces zones ne pouvant pratiquement pas se distinguer sous des conditions ordinaires de vision sous lumière diffuse, mais pouvant être facilement discernées l'une de l'autre à la vue sous des conditions rétroréfléchissantes.

4. Feuille suivant l'une quelconque des revendications 1 à 4, caractérisée en outre en ce que les marques (8) susdites sont constituées par des craquelures radiales dans la partie arrière des microlentilles (2) susdites, le lieu de ces craquelures radiales étant une cavité existant dans la microlentille.

5. Feuille suivant la revendication 4, caractérisée en outre en ce que, lorsque cette feuille est regardée sous des conditions de vision rétroréfléchissante dans les limites d'un champ conique prédéterminé de vision, les marques (8) susdites apparaissent plus foncées que les zones de fond environnantes, et en ce que, lorsque cette feuille est regardée sous des conditions rétroréfléchissantes autres que dans les limites du domaine conique prédéterminé susdit de vision, les marques précitées apparaissent plus brillantes que les zones de fond environnantes susdites.

6. Feuille suivant la revendication 1, caractérisée en outre en ce que les marques susdites (8) sont visibles sous forme d'une image depuis l'avant de la feuille sous des conditions ordinaires de lumière diffuse, et en ce que, sous des conditions réfléchissantes, elles sont visibles sous forme d'une image foncée en travers d'un champ conique prédéterminé de vision et sont visibles sous forme d'une image brillante dans une région annulaire par rapport à ce champ conique de vision.

7. Feuille suivant l'une quelconque des revendications 1 à 6, caractérisée en outre en ce que les microlentilles précitées font partiellement saillie depuis l'avant de cette feuille.

8. Feuille suivant l'une quelconque des revendications 1 à 7, caractérisée en outre en ce que les microlentilles susdites sont des microsphères de verre, ayant un indice de réfraction compris entre environ 1,5 et environ 2,7.

9. Procédé de formation d'images directionnelles dans une feuille (4) sensiblement transparente et comprenant une couche unique de microlentilles (2) étroitement espacées et agencées sur une couche supplémentaire de cette feuille, celle-ci, lorsqu'elle est utilisée, étant regardée depuis un premier côté ou côté avant, caractérisé en ce qu'il comprend l'envoi d'un faisceau laser (10) suivant un angle choisi d'incidence ($\theta$) vers la surface de la feuille (4) précitée, la longueur d'onde du faisceau laser étant choisie de manière que ce faisceau soit focalisé par des microlentilles pour former des marques (8) dans la partie arrière ou sur la surface arrière de chaque microlentille (2) que le faisceau susdit frappe, ou dans ladite couche supplémentaire, chacune de ces marques étant formée par une modification structurale des microlentilles susdites et/ou de la couche supplémentaire précitée, cette modification étant constituée, par exemple, par :

(a) une cavité s'ouvrant à travers l'arrière de la microlentille; ou

(b) une ouverture ou carbonisation dans la couche supplémentaire susdite, adjacente à l'arrière de la microlentille; ou

(c) une combinaison de (a) et de (b),

de telle sorte que ces marques sont centrées sur des axes qui s'étendent en passant par les centres optiques des microlentilles respectives et sont visibles sous forme d'une image (12) en travers d'un champ conique prédéterminé sous des conditions ordinaires de lumière diffuse.

10. Procédé suivant la revendication 9, caractérisé en outre en ce que le faisceau laser susdit a une durée d'impulsion de moins de 50 nanosecondes.

11. Procédé suivant le revendication 9, caractérisé en outre en ce que la feuille susdite est rétroréfléchissante et comporte un miroir (14) transmettant partiellement la lumière et disposé à l'endroit des surfaces arrière d'au moins certaines des microlentilles susdites.

12. Procédé suivant la revendication 11, caractérisé en outre e ce que le faisceau laser susdit a une longueur d'onde d'environ 532 nanomètres, une durée d'impulsion comprise entre environ 200 et environ 400 nanosecondes, une fréquence d'impulsion comprise entre environ 2 et environ 10 kilohertz, et une intensité de puissance à la surface de la feuille, qui est comprise entre environ 0,01 et environ 10,0 mégawatts par centimètre carré.

13. Procédé suivant l'une quelconque des revendications 9 à 12, caractérisé en outre en ce qu'il comporte de plus l'adaptation de la feuille susdite pour qu'elle soit liée par adhérence sur la zone d'informations d'un document, sans nuire à la lisibilité de ces informations.

14. Procédé suivant l'une quelconque des revendications 9 à 12, caractérisé en outre en ce qu'il comprend la liaison par adhérence de la feuille susdite sur la zone d'informations d'un document, sans nuire à la lisibilité de ces informations, avant que le faisceau laser précité soit dirigé vers la surface de cette feuille pour former les marques précitées.

15. Procédé suivant l'une quelconque des revendications 9 à 14, caractérisé en outre en ce que les microlentilles précitées font partiellement saillie depuis l'avant de la feuille susdite.

16. Procédé suivant l'une quelconque des revendications 9 à 15, caractérisé en outre en ce que les microlentilles précitées sont des microsphères de verre, ayant un indice de réfraction compris entre environ 1,5 et 2,7.

17. Procédé suivant l'une quelconque des revendications 9 à 16, caractérisé en outre en ce que le faisceau laser précité est choisi pour former des marques qui ne peuvent être vues sous forme d'une image sous des conditions de lumière diffuse qu'en travers d'un cône qui a une largeur totale d'environ 6 à environ 20 degrés, et dans lequel l'angle susdit d'incidence est différent des angles suivant lesquels les documents sont normalement regardés.

18. Procédé suivant l'une quelconque des revendications 9 à 17, caractérisé en outre en ce que le faisceau laser précité est dirigé suivant un second angle choisi différent d'incidence vers la surface de la feuille précitée pour former un second jeu de marques, ce jeu de marques apparaissant sous forme d'une image lorsqu'il est regardé suivant le second angle choisi précité.

**Patentansprüche**

1. Im wesentlichen durchsichtiges Blatt, das eine Monolage aus Mikrolinsen (2) besitzt, die auf einer anderen Schicht des Blattes angeordnet ist, und das im Gebrauch von einer ersten oder Vorderseite aus betrachtet wird,

dadurch gekennzeichnet, daß im hinteren Teil oder auf der hinteren Flache mindestens einiger der Mikrolinsen oder in der genannten anderen Schicht eine Markierung (8) vorgesehen ist und jede der genannten Markierungen aus einer modifizierten Struktur der Mikrolinsen und/oder der genannten anderen Schicht besteht und die Modifikation aus

(a) einem an der Rückseite einer Mikrolinse offenen Hohlraum oder

(b) einer in der genannten anderen Schicht im Bereich der Rückseite der Mikrolinse vorgesehenen Öffnung oder Ankohlung, oder

(c) einer Kombination von (a) und (b) besteht und die genannten Markierungen auf die optischen Achsen der Mikrolinsen durchsetzenden Achsen zentriert und unter gewöhnlichen Beleuchtungsbedingungen als ein Bild (12) sichtbar sind, das sich über ein vorherbestimmtes konisches Gesichtsfeld erstreckt.

2. Blatt nach Anspruch 1, dadurch gekennzeichnet, daß

das Blatt ferner einen für Licht teildurchlässigen Spiegel (14) besitzt, der hinter den hinteren Flächen wenigstens einiger der Mikrolinsen (2) so angeordnet ist, daß das Blatt in den von dem Spiegel besetzten Bereichen unter Rückstrahl-Betrachtungsbedingungen hell rückstrahlfähig ist.

3. Blatt nach Anspruch 2, dadurch gekennzeichnet, daß

die Mikrolinsen und der ihnen zugeordnete, für Licht teildurchlässige Spiegel in einem ersten oder Lesebereich einen anderen Rückstrahlwirkungsgrad hat als die Mikrolinsen und der ihnen zugeordnete, für Licht teildurchlässige Spiegel in einem zweiten oder Hintergrundbereich, so daß das Blatt rückstrahlfähige Lesebereiche und rückstrahlfähige Hintergrundbereiche hat, diese Bereiche bei der Betrachtung unter gewöhnlichem diffusem Licht im wesentlichen nicht voneinander unterscheidbar sind bei der Betrachtung der Rückstrahlbedingungen jedoch leicht voneinander unterscheidbar sind.

4. Blatt nach einem der Ansprüche 1 bis 3, dadurch gekennzeichnet, daß

die genannten Markierungen (8) radiale Risse im hinteren Teil der Mikrolinsen (2) sind und der Ort der radialen Risse ein Hohlraum in der Mikrolinse ist.

5. Blatt nach Anspruch 4, dadurch gekennzeichnet, daß

bei Betrachtung des Blattes unter Rückstrahlbedingungen innerhalb eines vorherbestimmten konischen Gesichtsfeldes die Markierungen (8) dunkler erscheinen als die sie umgebenden Hintergrundbereiche und daß bei Betrachtung unter Rückstrahlbedingungen außerhalb des vorherbestimmten konischen Feldes die Markierungen heller erscheinen als die sie umgebenden Hintergrundflächen.

6. Blatt nach Anspruch 1, dadurch gekennzeichnet, daß

die Markierungen (8) von der Vorderseite des Blattes aus bei Beleuchtung mit gewöhnlichem diffusem Licht als Bild sichtbar sind und daß sie unter Rückstrahlbedingungen in einem vorherbestimmten konischen Gesichtsfeld als ein dunkles Bild sichtbar sind und in einem das konische Gesichtsfeld ringförmig umgebenden Bereich als ein helles Bild sichtbar sind.

7. Blatt nach einem der Ansprüche 1 bis 6, dadurch gekennzeichnet, daß

die Mikrolinsen von der Vorderseite des Blattes teilweise vorstehen.

8. Blatt nach einem der Ansprüche 1 bis 7, dadurch gekennzeichnet, daß

die Mikrolinsen Mikroperlen aus Glas mit einer Brechzahl zwischen etwa 1,5 und etwa 2,7 sind.

9. Verfahren zum Erzeugen von gerichteten Bildern in einem im wesentlichen durchsichtigen Blatt (4), das eine Monolage aus nahe beieinander angeordneten Mikrolinsen (2) auf einer anderen Schicht des Blattes besitzt und das im Gebrauch von einer ersten oder Vorderseite aus betrachtet wird,

dadurch gekennzeichnet, daß

in dem Verfahren ein Laserstrahl (10) unter einem gewäh ten Einfallswinkel (8) auf die Vorderfläche des Blattes (4) gerichtet wird, wobei die Wellenlänge des Lasers so gewählt wird, daß der Strahl von den Mikrolinsen so fokussiert wird, daß im hinteren Teil oder auf der hinteren Fläche jeder von dem Strahl getroffenen Mikrolinse (2) oder in der genannten anderen Schicht Markierungen (8) ausgebildet werden und jede der genannten Markierungen aus einer modifizierten Struktur der Mikrolinsen und/oder der genannten anderen Schicht besteht und die Modifikation z.B. aus

(a) einem an der Rückseite einer Mikrolinse offenen Hohlraum oder

(b) einer in der genannten anderen Schicht im Bereich der Rückseite der Mikrolinse vorgesehenen Öffnung oder Ankohlung, oder

(c) einer Kombination von (a) und (b) besteht und die genannten Markierungen auf die optischen Achsen der Mikrolinsen durchsetzenden Achsen zentriert und unter gewöhnlichen Beleuchtungsbedingungen als ein Bild (12) sichtbar sind, das sich über ein vorherbestimmtes konisches Gesichtsfeld erstreckt.

10. Verfahren nach Anspruch 9, dadurch gekennzeichnet, daß

der Laserstrahl eine Impulsdauer von weniger als 50 Nanosekunden hat.

11. Verfahren nach Anspruch 9, dadurch gekennzeichnet, daß

das Blatt rückstrahlfähig ist und einen für Licht teildurchlässigen Spiegel besitzt (14), der auf den hinteren Flächen mindestens einiger der Mikrolinsen angeordnet ist.

12. Verfahren nach Anspruch 11, dadurch gekennzeichnet, daß

der Laserstrahl eine Wellenlänge von etwa 532 Nanometern, eine Impulsdauer zwischen etwa 200 und etwa 400 Nanosekunden, eine Impulsfrequenz von zwischen etwa 2 und etwa 10 kHz und auf der Oberfläche des Blattes eine Leistungsdichte zwischen etwa 0,01 und etwa 10,0 $MW/cm^2$ hat.

13. Verfahren nach einem der Ansprüche 9 bis 12, dadurch gekennzeichnet, daß

in dem Verfahren das Blatt befähigt wird, auf die Informationsfläche eines Dokuments geklebt zu werden, ohne die Lesbarkeit der Information zu beeinträchtigen.

14. Verfahren nach einem der Ansprüche 9 bis 12, dadurch gekennzeichnet, daß

in dem Verfahren das Blatt auf die Informationsfläche eines Dokuments geklebt wird, ohne die Lesbarkeit der Information zu beeinträchtigen, bevor der Laserstrahl zum Ausbilden der Markierungen auf die Vorderseite des Blattes gerichtet wird.

15. Verfahren nach einem der Ansprüche 9 bis 14, dadurch gekennzeichnet, daß

die Mikrolinsen von der Vorderseite des Blattes teilweise vorstehen.

16. Verfahren nach einem der Ansprüche 9 bis 15, dadurch gekennzeichnet, daß

die Mikrolinsen Mikroperlen aus Glas mit einer Brechzahl zwischen etwa 1,5 und 2,7 sind.

17. Verfahren nach einem der Ansprüche 9 bis 16, dadurch gekennzeichnet, daß

der Laserstrahl so ausgewählt ist, daß er Markierungen ausbildet, die bei Beleuchtung mit diffusem Licht nur in einem Kegel sichtbar sind, der eine volle Breite von etwa 6 bis etwa 20 Grad hat, und daß der Einfallswinkel sich von dem normalen Betrachtungswinkel von Dokumenten unterscheidet.

18. Verfahren nach einem der Ansprüche 9 bis 17, dadurch gekennzeichnet, daß

der Laserstrahl auf die Vorderseite des Blattes unter einem anderen zweiten gewählten Einfallswinkel gerichtet wird, um einen zweiten Satz von Markierungen auszubilden, die bei Betrachtung unter dem genannten zweiten gewählten Winkel als ein Bild erscheinen.

FIG.1

FIG.2

FIG.3

FIG. 4

FIG. 5

FIG. 6